# EUROPÄISCHE PATENTSCHRIFT

(11) **EP 2 133 596 B1**
(45) Veröffentlichungstag und Bekanntmachung des Hinweises auf die Patenterteilung: **27.04.2011**
(21) Anmeldenummer: 09007560.7
(22) Anmeldetag: 08.06.2009
(51) Int. Cl.: F16H 57/04, F01M 11/03

(54) **Ölwanne mit Ölfilter**
Oil basin with oil filter
Vanne d'huile dotée d'un filtre à huile

(30) Priorität: 10.06.2008 DE 102008027662
(43) Veröffentlichungstag der Anmeldung: 16.12.2009
(60) Teilanmeldung: 10008067.0
(73) Patentinhaber: IBS Filtran Kunststoff-/Metallerzeugnisse GmbH, 51597 Morsbach (DE)
(72) Erfinder: Beer, Markus, 51597 Morsbach (DE); Stausberg, Wolfgang, 51597 Morsbach (DE); Sahm, Dietmar, 51580 Reichshof (DE); Piehlk, Andreas, 57258 Freudenberg (DE); Theres, Michael, 51579 Morsbach (DE)
(74) Vertreter: Kierdorf, Theodor

(56) Entgegenhaltungen:
- EP-A- 1 339 954
- EP-A- 1 825 897
- DE-B- 1 123 160
- US-A1- 2001 047 996
- US-A1- 2003 024 768
- US-B1- 6 584 950

## Beschreibung

Die Erfindung betrifft eine Ölwanne, vorzugsweise aus Kunststoff oder Metall, für Motoren oder Getriebe, mit einem Filtergehäuse, umfassend eine Filtergehäuseoberschale, eine Filtergehäuseunterschale, ein Filtermedium, einen Filtereinlass und einen Filterauslass, und einer Ölablassöffnung im Bodenbereich der Ölwanne, die in der Weise ausgebildet ist, dass sie mittels einer von der Ölwannenunterseite kommenden Ölablassschraube mit Außengewinde verschließbar ist.

Aus dem Stand der Technik bekannte Ölwannen, vorzugsweise aus Metall oder Kunststoff, weisen üblicherweise einen in direkter Nähe zum Ölwannenboden platzierten separaten Filter, umfassend wenigstens ein Ölfiltermedium und ein Öffiltergehäuse, der vorzugsweise als Saugölfilter ausgebildet ist, auf. Derartige Ölwannen mit einem solchen Ölfilter sind beispielsweise aus des EP 1 339 954 B1, der EP 1 333 160 A1 und der DE 10 2005 025 726 A1 bekannt. Problematisch bei den vorstehend angegebenen Filtern ist, dass durch die Separierung der Bauteile, wie insbesondere der ölwanne und dem Ölfilter, eine aufwendige Befestigung/Fixierung der Bauteile untereinander notwendig ist. Eine Verbindung dieser Bauteile erfolgt im Stand der Technik beispielsweise durch eine Vernietung etc. Des weiteren weisen separat in einer Ölwanne platzierte Ölfilter einen Spalt zwischen der Filterunterseite und der Innenseite der Ölwanne auf, der ein unkontrolliertes Luftansaugen sowie die Entwicklung von Geräuschen durch Bewegung des losen Filters in der Ölwanne zur Folge hat. Dies hat eine Senkung der Filtereffizienz und eine Reduktion des Einsatzkomforts zur Folge.

In anderen Fällen wird der Filter fest und nicht mehr lösbar, durch beispielsweise Verschweißung/Verklebung in der Ölwanne befestigt. Dies ist beispielsweise aus der DE 100 08 692 A1 und der DE 197 35 445 A1 bekannt. Nachteilig an diesen Ausführungsformen ist, dass ein separater Austausch des Filters nicht möglich ist und ein Austausch der Ölwannen-Ölfiltereinheit somit sehr aufwendig und kostenintensiv ist.
Die US 2001/0047996 A1 offenbart eine Ölwanne mit den Merkmalen des Oberbegriffs des Anspruchs 1.

Aufgabe der Erfindung ist es daher, eine Ölwanne mit einem Ölfilter anzugeben, die die vorstehend dargelegten Nachteile nicht mehr aufweist bzw. insbesondere eine Ölwanne, vorzugsweise aus Metall oder Kunststoff, mit einem Ölfilter anzugeben, in der der Ölfilter fest integrierbar ist, wobei gleichzeitig die Anzahl der notwendigen Bauteilkomponenten reduziert, die Montage erleichtert, die Kosten zur Herstellung und Installation gesenkt, unerwünschte nachteilige technische Effekte reduziert und der Filter bei Bedarf einfach wechselbar und somit separierbar in der Ölwanne angeordnet sein soll.

Die Lösung der Aufgabe gelingt mit einer Ölwanne gemäß dem Oberbegriff des Anspruchs 1, bei der das Filtergehäuse ein Innengewinde umfasst, welches zur Aufnahme des Außengewindes der Ötablassschraube ausgebildet ist und bei der das Filtergehäuse wenigstens teilweise über die die Ölablassöffnung verschließende und mit ihrem Außengewinde in das filtergehäuseseitige Innengewinde eingreifende Ölablassschraube an der Ölwanne befestigt ist. Kerngedanke der Erfindung ist es somit, die in Ölwannen vorhandene Ölablassschraube nicht nur zum Verschließen der im Bodenbereich der Ölwanne vorhandenen Ölablassöffnung zu benutzen, sondern gleichzeitig über die Ölablassschraube weinigstens einen Teil des Filtergehäuses, insbesondere der Filtergehäuseunterschale, und/oder die Filtergehäuseoberschale, an der Ölwanne zu befestigen. Auf diese Weise gelingt eine besonders effiziente und kostengünstige Positionierung wenigstens eines Teils des Ölfiltergehäuses, da eine Ölablassschraube standardmäßig in gattungsgemäßen Ölwannen bereits vorhanden ist. Der bereits bekannten Verschlussfunktion der Ölablasschraube wird erfindungsgemäß nun auch eine Befestigungsfunktion zur Befestigung wenigstens eines Teils des Ölfiltergehäuses hinzugefügt. Dabei ist es zwar möglich, weitere Befestigungsmittel zur Befestigung des Filtergehäuses vorzusehen. Grundsätzlich ermöglicht der Kerngedanke der Erfindung jedoch auch, das Filtergehäuse allein über die Ölablassschraube an der Ölwanne zu befestigen.

Vorzugsweise umfasst die Filtergehäuseunterschale ein Innengewinde, welches zur Aufnahme des Außengewindes der Ölablassschraube ausgebildet ist. Neben der Filtergehäuseunterschale weist das Filtergehäuse bei dieser Ausführungsform somit auch eine Filtergehäuseoberschale auf, die in geeigneter Weise mit der Filtergehäuseunterschale verbunden ist. Dazu können weitere Verbindungsmittel, vorzugsweise lösbar, wie beispielsweise Rastmittel, um einen Austausch des innerhalb des Filtergehäuses angeordneten Filtermediums zu ermöglichen, vorhanden sein. Grundsätzlich ist es in diesem Zusammenhang beispielsweise auch möglich, sowohl die Filtergehäuseunterschale als auch die Filtergehäuseobershale mit einem geeigneten Innengewinde zu versehen, die im installierten Zustand in Einschraubrichtung der Ölablassschraube übereinanderliegend angeordnet sind, so dass die Ölablassschraube sowohl die Filtergehäuseunterschale als auch die Filtergehäuseobershale an der Ölwanne befestigt.

In einer weiteren bevorzugten Ausführungsform wird die Filtergehäuseunterschale von einem Bodenbereich der Ölwanne gebildet und die Filtergehäuseoberschale umfasst ein Innengewinde, welches zur Aufnahme des Außengewindes der Ölablassschraube ausgebildet ist. Bei dieser Ausführungsform ist eine separate Filtergehäuseunterschale somit nicht erforderlich, da diese Funktion durch einen Teilbereich des Ölwannenbodens erreicht wird. Die an der Ölwanne zu befestigende zur einen Seite offene Baueinheit umfasst somit wenigstens die Filtergehäuseoberschale (und ggf. auch das Filtermedium). Entsprechend ist das zur Aufnahme das Außengewindes der Ölablassschraube erforderliche Innengewinde an der Filtergehäuseoberschale angeordnet. Um den Eingriff des Außengewindes der Ölablassschraube in das filtergehäuseoberschalenseitige Innengewinde zu erleichtern, ist diese vorzugsweise in von der Innenoberfläche der Filtergehäuseoberschale abstehender und in Richtung zum Ölwannenboden zeigenden Weise ausgebildet. Besonders bevorzugt steht das Innengewinde bzw. der das Innengewinde bildende Teil der Filtergehäuseoberschale soweit in Richtung des Ölwannenbodens vor, dass dieser Teil der Filtergehäuseoberschale im installierten Zustand auf dem Ölwannenboden aufsteht bzw. mit diesem in Kontakt ist. Auf diese Weise wird die Filtergehäuseoberschale besonders gut an der Ölwanne befestigt.

Es hat sich zudem gezeigt, dass es vorteilhaft ist, wenn die erfindungsgemäße Befestigungsfunktion der Ölablassschraube zur Fixierung des Filtergehäuses bzw. Teilen davon mit weiteren Befestigungsmitteln kombiniert wird. Dazu weist die Ölwanne beispielsweise Rastmittel auf und an der Filtergehäuseunterschale und/oder an der Filtergehäuseoberschale sind gleichzeitig geeignete Klemmmittel angeordnet, die in der Weise ausgebildet sind, dass sie zum Positionieren der Filtergehäuseunterschale und/oder der Filtergehäuseoberschale in die Ölwanne in die ölwannenseitigen Rastmittel eingreifen. Auf diese Weise ist es beispielsweise insbesondere bei mehrteiligen Filtergehäusen möglich, die Befestigungsmöglichkeiten der einzelnen Filtergehäuseteile äußerst variabel zu gestalten. So kann beispielsweise die Filtergehäuseunterschale mittels der Ölablassschraube in der vorstehend beschriebenen Weise befestigt werden und die Filtergehäuseoberschale über geeignete Klemmmittel, wie beispielsweise Halterippen, die in ölwannenseitige Rastmittel, beispielsweise Raststege, eingeklemmt werden.

In einer weiteren bevorzugten Ausführungsform umfasst die Filtereinheit eine Aufnahme, insbesondere einen Aufnahmerahmen, der zur Aufnahme des Filtermediums ausgebildet ist. Die Aufnahme kann dabei ein separates Bauteil, oder aber auch in der Ölwanne aufgeformt sein. Zwischen der Aufnahme und der Filtergehäuseoberschale und/oder dem Ölwannenboden kann ferner eine Dichtung oder ein Klebschicht vorhanden sein, um eine besonders dichte Verbindung zu erreichen.

Alternativ zur Befestigung des Filters innerhalb der Ölwanne mit Hilfe der Ölablassschraube können stattdessen Klemmmittel, wie beispielsweise Halterippen zur Positionierung und Befestigung des Filters innerhalb der Ölwanne eingesetzt werden, die in der Weise ausgebildet sind, dass sie in ölwannenseitig angeordnete Rastmittel, wie beispielsweise zum Ölwanneninnenraum vorstehende Stege, eingreifen. Diese Alternative ist jedoch nicht vom Wortlaut der Erfindung nach Anspruch 1 umfasst. Zur Befestigung des Filters kommt es bei dieser Ausführungsform somit nicht auf die Position der Ölablassschraube bzw. der Ölablassöffnung an.

Sowohl die Ölablassschraube als auch Klemmmittel können zur lösbaren Fixierung des Ölfilters innerhalb der Ölwanne verwendet werden. Jede der genannten Befestigungsvarianten, nämlich erstens über die Ölablassschraube oder zweitens über Klemmmittel oder drittens über eine Kombination Ölablassschraube/Klemmmittel, ist sowohl auf die einteilige Ausführung des Filtergehäuses, d. h. das Filtermedium wird von der Filtergehäuseoberschale aufgenommen und die Filtergehäuseunterschale wird durch den Bodenbereich der Ölwanne ersetzt, als auch auf die zweiteilige Ausführungsform des Filtergehäuses, d. h. das Filtermedium ist zwischen der Filtergehäuseoberschale und -unterschale eingeklemmt, anwendbar.

Nachfolgend wird die Erfindung anhand der in den Zeichnungen dargestellten Ausführungsbeispiele weiter beschrieben. Es zeigen schematisch:
- Fig. 1: Perspektivische seitliche Schnittansicht durch eine Ölwanne mit einem Ölfilter in einer ersten Ausführungsform;
- Fig. 2: Perspektivische Ansicht einer Ölwanne mit einem Ölfilter in einer zweiten Ausführungs- form;
- Fig. 3: Perspektivische Schnittansicht der Ölwanne aus Figur 2 entlang der Linie A-A;
- Fig. 4: Seitliche Schnittansicht der Ölwanne aus Figur 2 bzw. 3;
- Fig. 5: Perspektivische Ansicht auf eine Ölwanne mit einem Ölfilter in einer dritten Ausfüh- rungsform, die nicht vom wortlaut der Erfindung nach Anspruch 1 umfasst ist; und
- Fig.: 6 Schnittansicht der Ölwanne aus Figur 5 entlang der Linie B-B.

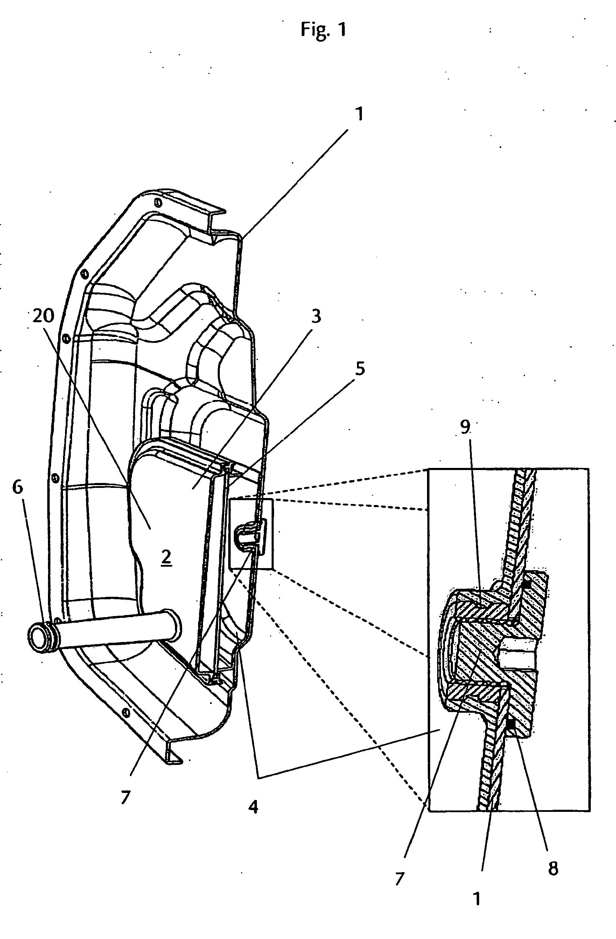

Die Ölwanne 1 gemäß der ersten Ausführungsform aus Fig. 1 umfasst einen an der Ölwanne 1 befestigten Ölfilter 2 mit einer Filtergehäuseoberschale 3, einer Filtergehäuseunterschale 4, ein zwischen den Filtergehäuseschalen 3 und 4 eingeklemmtes Filtermedium 5, einen Filterauslass 6, eine Ölablassschraube 7 mit Dichtring 8 und einem Außengewinde (nicht dargestellt), und ein filtergehäuseunterschalenseitiges Innengewinde (nicht dargestellt), welches von einer mit der Filtergehäuseunterschale verbundenen Gewindebuchse 9 gebildet wird. Der Bereich um die Ölablassschraube 7 ist ferner in eine Ausschnittsvergrößerung in Fig. 1 hervorgehoben.

Beim Ausführungsbeispiel gemäß Fig. 1 ist das zweiteilige Filtergehäuse aus Filtergehäuseoberschale 3, die an der Filtergehäuseunterschale 4 befestigt ist, und Filtergehäuseunterschale 4 somit allein über das an der Filtergehäuseunterschale 4 angeordnete Innengewinde der Gewindebuchse 9, in das das Außengewinde der Ölablassschraube 7 eingreift, befestigt. Zum Austauschen der gesamten Filtereinheit muss somit allein die Ölablassschraube 7 gelöst werden. Diese Vorgehensweise ist auch.deshalb besonders vorteilhaft, da in der Praxis mit einem Ölfilterwechsel üblicherweise auch ein Ölwechsel einhergeht.

Zusammenfassend vergeben sich für das erste Ausführungsbeispiel somit insbesondere folgende Vorteile:
a) Erleichterte Montage an die Ölwanne (bzw. an das Getriebe),
b) fest positionierter Filter,
c) Austauschbarkeit des Filters ist allein durch Lösen der Ölablassschraube 7 möglich, und
d) Verwendung der Ölablaßschraube 7 als Filterfixiere!ement, so dass keine weiteren Befestigungsmittel erforderlich sind.

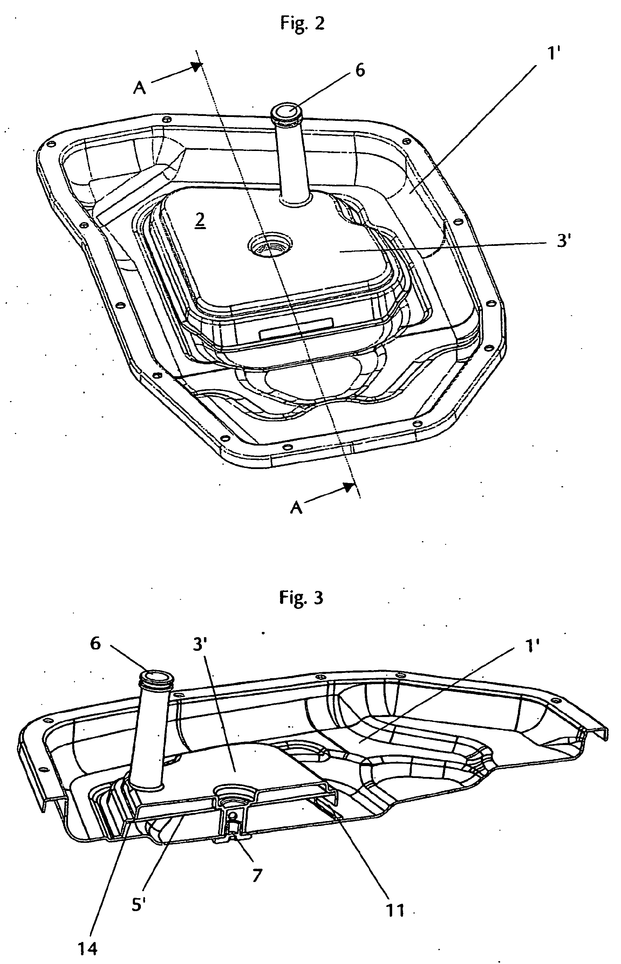

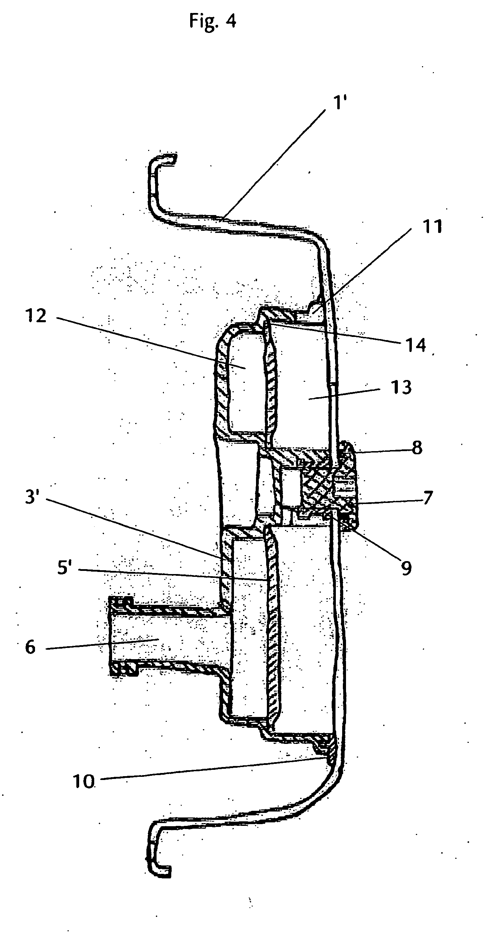

Die zweite Ausführungsform gemäß Figuren 2, 3 und 4 umfasst eine Ölwanne 1', eine Filtergehäuseoberschale 3', ein Filtermedium 5', einen Filterauslass 6, eine Ölablassschraube 7 mit Dichtring 8, eine filtergehäuseoberschalenseitig befestigte Gewindebuchse 9 mit Innengewinde (nicht dargestellt), eine Filterschalendichtung 10, einen Filtereinlass 11, einen Downstreambereich 12 und einen Upstreambereich 13. Die beispielsweise rahmenartig ausgebildete Aufnahme 14 dient der Aufnahme des Filtermediums 5' bei dieser einteiligen Ausführung des Filtergehäuses 20.

Der wesentliche Unterschied zur ersten Ausführungsform besteht darin, dass das Filtergehäuse zum Teil von einem Bodenbereich der Ölwanne 1' gebildet wird. Auf diese Weise ist eine separate Filtergehäuseunterschale bei dieser Ausführungsform nicht erforderlich. Um jedoch auch bei dieser Ausführungsform einen nach außen dichten Filtergehäuseinnenraum zu erreichen, umfasst die Ölwanne im Kontaktbereich mit der Filtergehäuseoberschale 3' die Filterschalendichtung 10, die lediglich im Bereich der Filtereinlasses 11 unterbrochen ist. Um eine Befestigung des Filtergehäuses bzw. vorliegend der Filtergehäuseoberschale 3' an der Ölwanne zu ermöglichen, ist bei dieser Ausführungsform ein innengewinde an der Filtergehäuseoberschale 3' vorgesehen, die von der in der Filtergehäuseoberschale 3' befestigten Gewindebuchse 9 gebildet wird. Die Gewindebuchse 9 ist dabei in einem von der Filtergehäuseoberschale 3' vorstehenden Bereich angeordnet. Dieser Bereich steht soweit von der Innenoberfläche der Filtergehäuseoberschale 3' in der Weise vor, dass er im eingebauten Zustand gemäß Fig. 2 auf dem ßodenbereich der Ölwanne 1' aufsteht.

Zusammenfassend ergeben sich ergänzend zu den Vorteilen a) bis d) der ersten Ausführungsform für die Zweite Ausführungsform somit folgende Vorteile:
e) Einsparung einer Filterunterschale,
f) flacherer Aufbau ist möglich, und
g) Entfall jeglichen Luftspalts zwischen Filterunterseite und Ölwanneninnenseite.

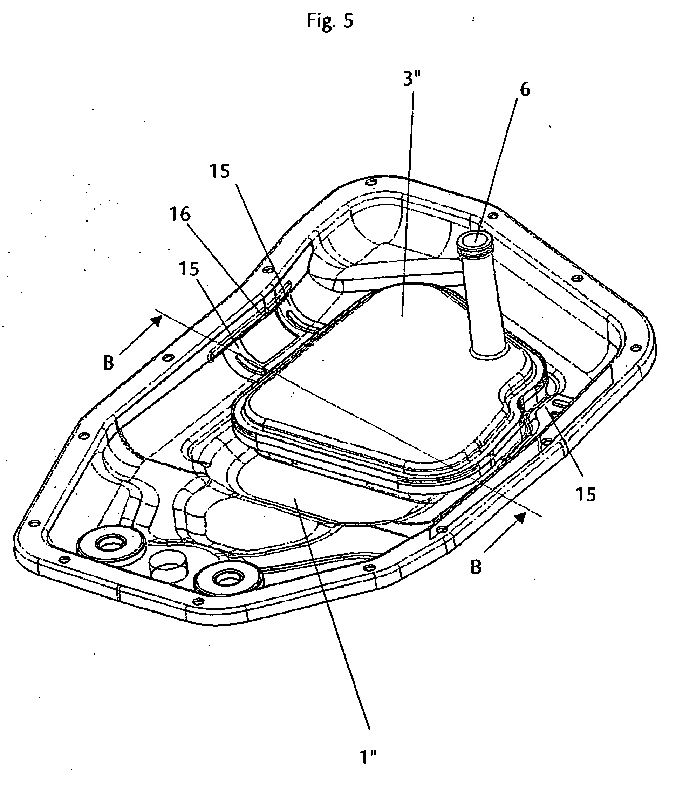

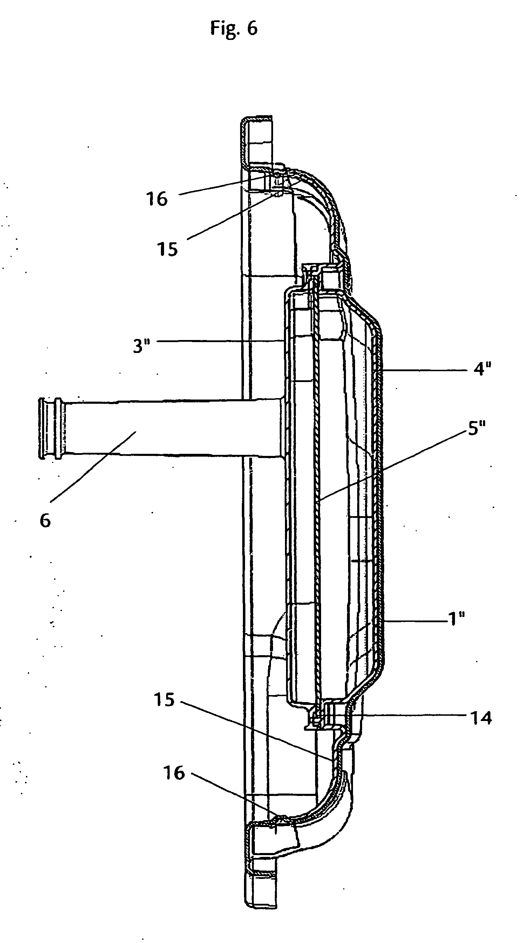

Die Figuren 5 und 6 zeigen ein drittes Ausführungsbeispiel, welches jedoch nicht vom Worflout der Erfindung nach Anspruch 1 umfasst ist. Gemäß dieser Variante erfolgt die Positionierung und Befestigung des Ölfilters 2 an der Ölwanne 1 nicht über die Ölablassschraube 7, sondern über Klemmmittel 15, die am Filtergehäuse 20 angeordnet sind, unabhängig davon ob eine ein- oder zweiteilige Form des Filtergehäuses 20 vorliegt, und in Rastmittel 16, beispielsweise Raststege, die ölwannenseitig angeordnet sind, eingreifen. Diese Befestigungsmittel (Klemmmittel 15 und Rastmittel 16) sind vorzugsweise an zwei sich gegenüberliegenden Seiten vorhanden und ermöglichen somit eine Befestigung des Ölfilters 2 innerhalb der Ölwanne 1" unabhängig von der Lage der Ölablassschraube 7 (nicht dargestellt). Für die Befestigung des Ölfilters 2 kommt es somit auf die tatsächliche Position der Ölablassöffnung bzw. der Ölablassschraube nicht an.

Für das dritte Ausführungsbeispiel gemäß Fig. 3 ergibt sich somit ergänzend zu den Vorteilen a), b) und d) bis g) der vorhergehenden Ausführungsbeispiele der Vorteil, dass bzgl. der Aufnahmebefestigung die Position der Ölablaßschraube frei wählbar ist. Zur Verstärkung der Befestigung des Ölfilters 2 in der Ölwanne 1 ist es optional möglich, zusätzlich zu den Klemmmittel 15 die Ölab!assschraube 7 (nicht dargestellt) zur Positionierung und Fixierung des Ölfilters 2 zu verwenden.

Der integrierte Ölfilter 2 ist vorzugsweise ein als Saugölfilter eingesetzter Hauptstromölfilter. Es ist auch denkbar, den Ölfilter 2 mit zusätzlichen Anschlüssen als eine Kombination aus Saug- und Druckölfilter auszubilden. Ebenso ist es bei Bedarf vorteilhaft, im gemeinsamen Filtergehäuse 20 sowohl Haupt- als auch Nebenstromölfilter anzuordnen.

## Patentansprüche

1. Ölwanne (1), vorzugsweise aus Kunststoff oder Metall, für Motoren oder Getriebe, mit einem Filtergehäuse (20), umfassend eine Filtergehäuseoberschale (3), eine Filtergehäuseunterschale (4), ein Filtermedium (5), einen Filtereinlass (11) und einen Filterauslass (6), und einer Ölablassöffnung im Bodenbereich der Ölwanne (1), die in der Weise ausgebildet ist, dass sie mittels einer von der Ölwannenunterseile kommenden Ölablassschraube (7) mit Außengewinde verschließbar ist,
wobei das Filtergehäuse (20) ein Innengewinde umfasst, welches zur Aufnahme des Außengewindes der Ölablassschraube (7) ausgebildet ist, **dadurch gekennzeichnet, dass** das Filtergehäuse (20) wenigstens teilweise über die die Ölablassöffnung verschließende und mit ihrem Außengewinde in das filtergehäuseseitige Innengewinde eingreifende Ölablassschraube (7) an der Ölwanne (1) befestigt ist.

2. Ölwanne (1) gemäß dem vorhergehenden Anspruch,
**dadurch gekennzeichnet,**
**dass** die Filtergehäuseunterschale (4) ein Innengewinde umfasst, welches zur Aufnahme des Außengewindes der Ölablassschraube (7) ausgebildet ist.

3. Ölwanne (1) gemäß Anspruch 1,
**dadurch gekennzeichnet,**
**dass** die Filtergehäuseunterschale (4) von einem Bodenbereich der Ölwanne (1) gebildet wird, und dass die Filtergehäuseoberschale (3) ein Innengewinde umfasst, welches zur Aufnahme des Außengewindes der Ölablassschraube (7) ausgebildet ist.

4. Ölwanne (1) gemäß Anspruch 3,
**dadurch gekennzeichnet,**
**dass** an der Filtergehäuseoberschale (3) eine Aufnahme (14), insbesondere ein Aufnahmerahmen, vorhanden ist, der zur Aufnahme des Filtermediums (5) ausgebildet ist.

5. Ölwanne (1) gemäß einem der Ansprüche 1 bis 4,
**dadurch gekennzeichnet,**
**dass** das Filtergehäuse (20) ein Klemmittel (15) aufweist, mit welchem das Filtergehäuse (20) in der Ölwanne (1) positioniert und befestigt wird, in der Weise, dass das Klemmmittel (15) in ein ölwannenseitig angeordnetes Rastmittel (16) eingreift.

## Claims

1. Oil basin (1), preferably of plastic or metal, for engines or gear boxes, with a filter housing (20), comprising a filter housing upper shell (3), a filter housing lower shell (4), a filter medium (5), a filter inlet (11) and a filter outlet (6), and an oil outlet aperture in the base portion of said oil basin (1), built in such a way that it can be closed by means of a screwed oil outlet plug (7) with an external thread coming from the under surface of said oil basin,
wherein said filter housing (20) comprises an internal thread, which is designed to engage with the external thread of said screwed oil outlet plug (7),
**characterized in that**
the filter housing (20) is mounted with the oil basin (1) at least partially via said screwed oil outlet plug (7) closing said oil outlet aperture and engaging with its external thread said internal thread of said filter housing.

2. Oil basin (2) according to the preceding claim,
**characterized in that**
the filter housing lower shell (4) comprises an internal thread, which is designed to engage the external thread of said screwed oil outlet plug (7).

3. Oil basin (1) according to claim 1,
**characterized in that**
said filter housing lower shell (4) is provided by a base area of said oil basin (1) and that said filter housing upper shell (3) comprises an internal thread, which is designed to engage said external thread of said screwed oil outlet plug (7).

4. Oil basin (1) according to claim 3,
**characterized in that**
a fixture (14), preferably a fixture frame, is located at said filter housing upper shell (3), which is designed for receiving said filter medium (5).

5. Oil basin (1) according to one of claims 1 to 4,
**characterized in that**
said filter housing (20) comprises clamping means (15), which position and fix the filter housing (20) in the oil basin (1) in such a way that said clamping means (15) engage with locking means (16) on said oil basin.

## Revendications

1. Carter d'huile (1), de préférence en matière synthétique ou métal, destiné à des moteurs ou des boîtes de vitesses, doté d'un boîtier de filtre (20), comprenant une coque supérieure de boîtier de filtre (3), une coque inférieure de boîtier de filtre (4), un milieu filtrant (5), une entrée de filtre (11) et une sortie de filtre (6), et une ouverture d'évacuation d'huile dans la zone de fond du carter d'huile (1), qui est conçue de façon qu'elle puisse être fermée au moyen d'une vis d'évacuation d'huile (7) venant du côté inférieur du carter d'huile avec filetage extérieur,
le boîtier de filtre (20) comprenant un filetage intérieur qui est conçu pour le logement du filetage extérieur de la vis d'évacuation d'huile (7), **caractérisé en ce que** le boîtier de filtre (20) est fixé sur le carter d'huile (1) au moins partiellement au moyen de la vis d'évacuation d'huile (7) fermant l'ouverture d'évacuation d'huile et s'engageant par son filetage extérieur dans le filetage intérieur côté boîtier de filtre.

2. Carter d'huile (1) selon la revendication précédente,
**caractérisé en ce que**
la coque inférieure du boîtier de filtre (4) présente un filetage intérieur qui est conçu pour le logement du filetage extérieur de la vis d'évacuation d'huile (7).

3. Carter d'huile (1) selon la revendication 1,
**caractérisé en ce que**
la coque inférieure du boîtier de filtre (4) est formée par une zone de fond du carter d'huile (1) et **en ce que** la coque supérieure du boîtier de filtre (3) comprend un filetage intérieur qui est conçu pour le logement du filetage extérieur de la vis d'évacuation d'huile (7).

4. Carter d'huile (1) selon la revendication 3,
**caractérisé en ce**
**qu'**un logement (14), en particulier un cadre de logement, est présent sur la coque supérieure du boîtier de filtre (3), lequel cadre est conçu pour le logement du milieu filtrant (5).

5. Carter d'huile (1) selon l'une quelconque des revendications 1 à 4,
**caractérisé en ce que**
le boîtier de filtre (20) présente un moyen de serrage (15) avec lequel le boîtier de filtre (20) est positionné et fixé dans le carter d'huile (1), en ce sens que le moyen de serrage (15) s'engage dans un moyen d'encliquetage (16) disposé côté carter d'huile.
